# EUROPÄISCHE PATENTSCHRIFT

(11) **EP 3 164 700 B1**
(45) Veröffentlichungstag und Bekanntmachung des Hinweises auf die Patenterteilung: **21.03.2018**
(21) Anmeldenummer: 15727359.0
(22) Anmeldetag: 01.06.2015
(51) Int. Cl.: F01N 13/00, F01N 13/18, G01M 15/02, G01M 15/10, G01N 27/407

(54) **SENSORVORRICHTUNG ZUR ERFASSUNG MINDESTENS EINER EIGENSCHAFT EINES FLUIDEN MEDIUMS UND VERFAHREN ZU DESSEN BEREITSTELLUNG**
SENSOR DEVICE FOR DETECTING AT LEAST ONE PROPERTY OF A FLUID MEDUIM AND METHOD FOR ITS PROVISION.
DISPOSITIF DE CAPTEUR POUR LA DÉTECTION D'AU MOINS UNE PROPRIETÉ PHYSIQUE D'UN MILIEU FLUIDE ET PROCÉDÉ POUR SA MISE EN OEUVRE

(30) Priorität: 02.07.2014 DE 102014212862
(43) Veröffentlichungstag der Anmeldung: 10.05.2017
(73) Patentinhaber: Robert Bosch GmbH, 70442 Stuttgart (DE)
(72) Erfinder: BREHM, Joachim Ulrich, 37001 Ceske Budejovice (CZ); VACHA, Karel, 38232 Mirkovice (CZ); KOTYNEK, Milan, 37350 Olesnik (CZ); RUSS, Sebastian, 71277 Rutesheim (DE)
(86) Internationale Anmeldenummer: PCT/EP2015/062088
(87) Internationale Veröffentlichungsnummer: WO 2016/000886

(56) Entgegenhaltungen:
- EP-A2- 2 594 927
- DE-A1-102009 046 558
- DE-A1-102012 025 078

## Beschreibung

### Stand der Technik

Aus dem Stand der Technik sind Sensorvorrichtungen zur Erfassung mindestens einer Eigenschaft eines fluiden Mediums, vorzugsweise eines Gases bekannt. Hierzu gehören Sensorvorrichtungen mit mindestens einem Sensorelement zur Erfassung mindestens eines Parameters eines Gases, insbesondere mindestens eine Eigenschaft eines Abgases einer Verbrennungskraftmaschine, wie beispielsweise der Anteil an einem Bestandteil des Abgases, insbesondere der Sauerstoffanteil, der Stickoxidanteil und/oder der Anteil an gasförmigen Kohlenwasserstoffen. Weitere Eigenschaften, die mit einer derartigen Sensorvorrichtung erfasst werden können, sind beispielsweise die Partikelbeladung, die Temperatur und/oder der Druck des fluiden Mediums. Bei einer derartigen Sensorvorrichtung kann es sich insbesondere um eine Lambdasonde handeln. Lambdasonden werden vorzugsweise im Abgasstrang einer Verbrennungskraftmaschine eingesetzt, vor allem um den Sauerstoffpartialdruck im Abgas zu erfassen. Lambdasonden werden beispielsweise beschrieben in Konrad Reif, Hrsg., Sensoren im Kraftfahrzeug, 2. Auflage, Springer Vieweg, 2012, Seite 160 bis 165. Siehe auch EP 2 594 927 A2.

Derartige Sensorvorrichtungen verfügen insbesondere an ihrer abgasseitigen Spitze über Schutzgehäuse, die in den Abgasstrom hineinragen. Das Schutzgehäuse selbst kann einteilig oder mehrteilig ausgeführt sein, wobei eine mehrteilige Ausführung meist über ein Innengehäuse und ein, das Innengehäuse umgebende Außengehäuse verfügt, zwischen denen ein Zwischenraum ausgebildet ist, in welchem sich gegebenenfalls weitere Schutzrohre befinden. Schutzgehäuse, welche zwei Schutzrohre aufweisen und die daher auch als Doppelschutzrohr bezeichnet werden, werden besonders häufig eingesetzt.

Die Schutzgehäuse dienen zum Schutz vor mechanischen Beanspruchungen sowohl beim Einbau als auch durch in der Abgasanlage auftretende Partikel, für eine gezielte Strömungsführung des fluiden Mediums innerhalb der Sensorvorrichtung zu dem sich darin befindlichen Sensorelement sowie zum Schutz des Sensorelements gegenüber einem Kondensat aus dem Abgas und einem damit verbundenen Thermoschock des Sensorelements. Ein so genannter "Thermoschock" tritt insbesondere dann auf, wenn sich aus dem Abgasstrom ein Kondensattropfen ausbildet und auf das heiße keramische Sensorelement abscheidet, wodurch lokale Temperaturunterschiede auf der Oberfläche des Sensorelements erzeugt werden, welche zu hohen thermisch induzierten Spannungen in dem Sensorelement führen können, die schließlich eine Beschädigung oder sogar Zerstörung des Sensorelements hervorrufen können. Das Schutzgehäuse ist in der Regel daher in einer Weise ausgestaltet, um eine in der Abgasanlage auftretende Flüssigkeitsbelastung der Sensorvorrichtung möglichst auf eine Menge zu reduzieren, die für das Sensorelement weitgehend unschädlich ist.

Allerdings sind die Anforderungen an das Schutzgehäuse in vielen Fällen gegenläufig. In der Praxis besteht insbesondere ein Zielkonflikt zwischen den Anforderungen hinsichtlich eines hohen Schutzes vor dem Thermoschock und hinsichtlich einer hohen Dynamik der Sensorvorrichtung. Dies bedeutet insbesondere, dass Maßnahmen am Schutzgehäuse, die dazu führen, dass sich eine Belastung des Sensorelements mit Flüssigkeit verringern lässt, oftmals gleichzeitig eine Reduzierung der Dynamik der Sensorvorrichtung zur Folge haben. Dies ist dadurch bedingt, dass ein möglichst schneller Gasaustausch in der Nähe des Sensorelements in der Regel die Dynamik der Sensorvorrichtung fördert, während sich hierdurch gleichzeitig die Flüssigkeitsbelastung des Sensorelements erhöht, wodurch in der Regel der Schutz vor Thermoschock herabgesetzt wird. In der Praxis bedeutet dies, dass bei einem ausgewählten Schutzgehäuse regelmäßig nur eine der beiden Anforderungen hohe Dynamik oder hoher Schutz vor Thermoschock auf weitgehend zufriedenstellende Weise erfüllt werden kann.

Üblicherweise in Verbrennungskraftmaschinen eingesetzte Sensorvorrichtungen weisen eine so genannte ungerichtete Konstruktion des Schutzgehäuses auf. Unter der "ungerichteten Konstruktion" des Schutzgehäuses wird eine Konstruktion verstanden, gemäß welcher die Sensorvorrichtung unabhängig von der Strömungsrichtung des fluiden Mediums, insbesondere des Abgases, in den Messgasraum eingebracht ist. Die Sensorvorrichtung ist demgemäß üblicherweise in den Abgastrakt der Verbrennungskraftmaschine eingebracht, ohne dass hierbei die Strömungsrichtung des sich in dem Abgastrakt der Verbrennungskraftmaschine befindlichen Abgases berücksichtigt wird, etwa in Bezug auf eine Anordnung mindestens einer Eintrittsöffnung für das fluide Medium in das Schutzgehäuse. Andererseits ist es bekannt, dass die Dynamik der Sensorvorrichtung von einer ganzen Reihe von Faktoren abhängt, insbesondere von den Details einer Ausgestaltung des mindestens einen Schutzgehäuses in der Sensorvorrichtung, wozu auch die Anordnung der Eintrittsöffnungen für das fluide Medium in das Schutzgehäuse gehört.

Es wäre daher wünschenswert, eine Sensorvorrichtung zur Erfassung mindestens einer Eigenschaft eines fluiden Mediums, insbesondere des Abgases einer Verbrennungskraftmaschine, bereitzustellen, welche über eine so genannte "gerichtete Konstruktion" des mindestens einen Schutzgehäuses verfügt. Hierunter wird eine Konstruktion verstanden, in welcher die Sensorvorrichtung in Bezug auf die Strömungsrichtung des Abgases in dem Abgastrakt der Verbrennungskraftmaschine orientiert ausgerichtet ist, insbesondere um auf diese Weise die Dynamik der Sensorvorrichtung zu verbessern. Allerdings fehlt bisher eine Sensorvorrichtung, welche über eine möglichst einfache Konstruktion verfügt und welche in einem möglichst einfach durchzuführenden Verfahren in Form einer gerichteten Konstruktion in Bezug auf die Strömungsrichtung des fluiden Mediums in dem Abgastrakt bereitgestellt werden kann.

### Offenbarung der Erfindung

Erfindungsgemäß werden eine Sensorvorrichtung zur Erfassung mindestens einer Eigenschaft eines fluiden Mediums, insbesondere eines Abgases einer Verbrennungskraftmaschine, sowie ein Verfahren zur Bereitstellung einer derartigen Sensorvorrichtung vorgeschlagen, welche die bekannten Einschränkungen und Nachteile zumindest weitgehend überwinden. Eine derartige Sensorvorrichtung dient insbesondere zur Erfassung mindestens einer Eigenschaft eines fluiden Mediums, vorzugsweise einer Eigenschaft des Abgases einer Verbrennungskraftmaschine, beispielsweise des Sauerstoffanteils, des Stickoxidanteils und/oder des Anteils an gasförmigen Kohlenwasserstoffen im Abgas. Die Erfassung von weiteren Eigenschaften des fluiden Mediums ist jedoch denkbar. Die vorliegende Sensorvorrichtung eignet sich aufgrund ihrer Ausgestaltung insbesondere zum Einsatz bei hohen Temperaturen, vorzugsweise im Bereich von 600 °C bis 1000 °C, ist jedoch nicht darauf beschränkt.

Die erfindungsgemäße Sensorvorrichtung umfasst mindestens ein Schutzgehäuse, welches zur Aufnahme mindestens eines Sensorelements vorgesehen ist und zu diesem Zweck das Sensorelement zumindest teilweise umgibt. Unter einem Schutzgehäuse ist hierbei eine Vorrichtung zu verstehen, welche eingerichtet ist, um das Sensorelement zumindest gegenüber üblichen, beim Einbau der Sensorvorrichtung und/oder im Betrieb der Sensorvorrichtung auftretenden mechanischen und/oder chemischen Belastungen zu schützen. Das Schutzgehäuse kann hierzu zumindest teilweise aus einem steifen Material, insbesondere aus einem Metall und/oder einer Legierung und/oder einer Keramik, hergestellt werden, welches insbesondere bei einem Fixieren des Schutzgehäuses bei üblichen Kräften, etwa bei üblichen Verschraubungskräften, keine Verformung durchläuft. Insbesondere kann das Schutzgehäuse dazu eingerichtet sein, um die Sensorvorrichtung nach außen hin zumindest teilweise zu umschließen und somit zumindest einem Teil der Sensorvorrichtung eine äußere Gestalt zu geben. Das Schutzgehäuse kann insbesondere dazu eingerichtet sein, um vollständig oder teilweise in das fluide Medium eingebracht zu werden, beispielsweise in den Abgasstrang einer Verbrennungskraftmaschine.

Das Schutzgehäuse kann einteilig, zweiteilig, dreiteilig oder mehrteilig ausgeführt sein. Erfindungsgemäß ist das Schutzgehäuse insbesondere zweiteilig ausgeführt und weist dementsprechend ein gesondertes Innengehäuse auf, welches das Sensorelement zumindest teilweise umgeben kann, wobei das Innengehäuse selbst zumindest teilweise von einem Außengehäuse umgeben sein kann. Das Innengehäuse und das Außengehäuse können in dieser Ausgestaltung derart zueinander angeordnet sein, dass sich zwischen dem Innengehäuse und dem Außengehäuse ein mit dem Abgas beaufschlagbarer Zwischenraum ausbildet, der vorzugsweise die Form eines Ringspaltes annehmen kann.

Innerhalb des Schutzgehäuses kann sich ein von dem fluiden Medium durchströmbarer Strömungspfad befinden. Unter einem Strömungspfad wird derjenige Weg verstanden, welchen das fluide Medium von einem Eintritt in das Schutzgehäuse bis zu einem Austritt aus dem Schutzgehäuse zurücklegen kann, bevor das fluide Medium hieran anschließend das Sensorelement beaufschlagen kann. Dieser Weg wird hierbei neben einer Geschwindigkeit, mit welcher das fluide Medium in das Schutzgehäuse eintritt, im Wesentlichen durch eine geometrische Ausgestaltung des Zwischenraums innerhalb des Schutzgehäuses festgelegt. Unabhängig von einer tatsächlichen Bewegung von einzelnen Partikeln und/oder Molekülen in dem fluiden Medium, welche auf einer mikroskopischen Skala sowohl einen laminaren als auch einen turbulenten Zustand annehmen kann, kann das fluide Medium in einer makroskopischen Skala jedoch einem, auch idealisierten, Strömungspfad folgen, welcher entlang von inneren Wänden innerhalb des Schutzgehäuses und sich gegebenenfalls darin befindlichen Einbauten verlaufen kann. Eine Ausgestaltung des Strömungspfades innerhalb des Schutzgehäuses kann sich somit durch eine Geometrie der Ausgestaltung des Schutzgehäuses einschließlich der sich darin befindlichen Eintrittsöffnungen für den Eintritt des fluiden Mediums in den Zwischenraum des Schutzgehäuses, der sich darin befindlichen Zutrittsöffnungen für einen Zutritt des fluiden Mediums aus dem Zwischenraum zu dem Sensorelement und gegebenenfalls sich in dem Zwischenraum befindlichen zusätzlichen Einbauten festlegen lassen.

Erfindungsgemäß ist das Außengehäuse mittels einer Pressanpassung, insbesondere mittels einer leichten Pressanpassung, in Bezug auf das Innengehäuse fixiert. Unter der Fixierung mittels Pressanpassung wird insbesondere in Bezug auf die vorliegende Erfindung verstanden, dass das Außengehäuse, welches vorzugsweise abschnittsweise zylinderförmig ausgestaltet sein kann, zumindest in einem Abschnitt das Innengehäuse, welches ebenfalls vorzugsweise abschnittsweise zylinderförmig ausgestaltet sein kann, derart umgibt, dass, ohne dass in dem betreffenden Abschnitt, in welchem die Pressanpassung zwischen den beiden Teilen wirkt, im Wesentlichen kein Zwischenraum mehr zwischen dem Außengehäuse und dem Innengehäuse verbleibt, so dass die Innenseite der Oberfläche des Außengehäuses in dem betreffenden Abschnitt der Pressanpassung fest auf der Oberfläche der Außenseite des Innengehäuses anliegt, wobei die beiden Teile, welche mittels der Pressanpassung gegeneinander fixiert sind, bei Anwendung eines äußeren Drucks dennoch gegeneinander verschiebbar und insbesondere auch drehbar gegeneinander gelagert sind. Die Pressanpassung, insbesondere die leichte Pressanpassung, wobei die Art der Pressanpassung insbesondere durch eine Höhe eines anzuwendenden äußeren Drucks, um die Pressanpassung zu einzurichten, charakterisiert sein kann, führt also nicht zu einer vollständigen Fixierung der beiden betreffenden Teile gegeneinander, sondern ermöglicht vielmehr eine gezielte weitere Veränderung der relativen Lage der beiden Teile zueinander, insbesondere eine Verschiebung und/oder Drehung mindestens eines der beiden Teile, durch Anwendung eines gewählten äußeren Druckes.

Erfindungsgemäß verfügt das Außengehäuse weiterhin über mindestens ein Feststellelement, welches beispielsweise in Form einer vorstehenden Nase ausgestaltet sein kann und welches insbesondere dazu vorgesehen sein kann, um das Außengehäuse in einen gesonderten Einschweißnippel einzubringen und, in einer besonders bevorzugten Ausgestaltung, in Bezug auf den Einschweißnippel zu fixieren. Der Einschweißnippel kann hierzu insbesondere eine Einrastposition aufweisen, in welcher das Feststellelement das Außengehäuse nach seiner Einfügung in dem Einschweißnippel fixiert. Unter einem "Einschweißnippel" wird ein beliebiges mechanisches Bauteil verstanden, welches dazu eingesetzt werden kann, ein erstes Bauteil, hier das Außengehäuse, aufzunehmen, um dieses auf ein weiteres Bauteil, hier ein unten beschriebenes Sensorgehäuse, derart aufzubringen, dass das erste Bauteil in Bezug auf das zweite Bauteil mittels des Einschweißnippels fixiert sein kann.

In einer bevorzugten Ausgestaltung verfügt das Sensorelement weiterhin über ein Sensorgehäuse, wobei erfindungsgemäß das Sensorgehäuse fest mit dem Innengehäuse verbunden sein kann, vorzugsweise mittels einer Schweißnaht, welche etwa zwischen dem Sensorgehäuse und dem inneren Schutzgehäuse angebracht sein kann. Unter dem "Sensorgehäuse" wird hierbei insbesondere eine Schutzvorrichtung für das Sensorelement verstanden, welche das Sensorelement zusätzlich oder alternativ zum Innengehäuse zumindest teilweise umgeben kann.

Insbesondere in der oben beschriebenen Ausgestaltung, in welcher das Außengehäuse weiterhin über das mindestens eine Feststellelement zur Einbringung in den Einschweißnippel verfügt, kann die Sensorvorrichtung vorzugsweise derart ausgestaltet sein, dass das Außengehäuse weiterhin mittels des Einschweißnippels in Bezug auf das Sensorgehäuse fixiert sein kann. Da in dieser Ausgestaltung das Sensorgehäuse fest mit dem Innengehäuse verbunden ist, kann auf diese Weise eine weitere Fixierung des Außengehäuses in Bezug auf das Innengehäuse erfolgen.

In einer weiteren bevorzugten Ausgestaltung kann das Sensorgehäuse über einen Dichtring verfügen, wobei der Dichtring derart ausgestaltet ist, dass es dadurch ermöglicht wird, dass der Einschweißnippel in Bezug auf den Dichtring fixiert sein kann. Auf diese Weise kann insbesondere erreicht werden, dass sich das Sensorgehäuse, welches das Sensorelement zumindest teilweise umgibt, nicht von dem Schutzgehäuse, welches das Innengehäuse und das Außengehäuse, welches mittels des mindestens einen Feststellelements in Bezug auf den Einschweißnippel fixiert sein kann, umfasst, lösen kann. Auf diese Weise kann insbesondere eine gerichtete Konstruktion der Sensorvorrichtung, d.h. eine Ausrichtung des Schutzgehäuses in Bezug auf die Strömungsrichtung des fluiden Mediums in dem Abgastrakt, erreicht werden.

In einer weiteren bevorzugten Ausgestaltung kann das Außengehäuse, insbesondere in denjenigen Bereichen, in welchen das Außengehäuse mittels der Pressanpassung in Bezug auf das Innengehäuse fixiert ist, das Innengehäuse derart umschließen, dass sich ein Zwischenraum zwischen dem Außengehäuse und dem Innengehäuse ausbilden kann. Insbesondere um eine Ausbildung des oben beschriebenen Strömungspfades für das fluide Medium innerhalb des Schutzgehäuses zu ermöglichen, können das Außengehäuse über mindestens eine Eintrittsöffnung für das fluide Medium aus dem Messgasraum in den Zwischenraum und das Innengehäuse über mindestens eine Zutrittsöffnung für das fluide Medium aus dem Zwischenraum zu dem Sensorelement verfügen.

Insbesondere um die oben beschriebene gerichtete Konstruktion der Sensorvorrichtung zu ermöglichen, kann hierzu das Außengehäuse eine Mantelfläche aufweisen und sich die Eintrittsöffnung für das fluide Medium in der Mantelfläche des Außengehäuses befinden, wobei in dieser Ausgestaltung auch das Innengehäuse eine Mantelfläche aufweisen kann und sich die Zutrittsöffnung für das fluide Medium aus dem Zwischenraum zu dem Sensorelement in der Mantelfläche des Innengehäuses befinden kann. Auf diese Weise kann insbesondere der Strömungspfad in dem Schutzgehäuse der Sensorvorrichtung derart ausgestaltet sein, dass dieser zu einer hohen Dynamik der Sensorvorrichtung bei gleichzeitig verringerter Belastung des Sensorelements mit Flüssigkeit aus dem fluiden Medium führen kann.

In einem weiteren Aspekt betrifft die vorliegende Erfindung ein Verfahren zur Bereitstellung einer Sensorvorrichtung zur Erfassung mindestens einer Eigenschaft eines fluiden Mediums, insbesondere eines Abgases einer Verbrennungskraftmaschine. Die Sensorvorrichtung umfasst hierbei mindestens ein Schutzgehäuse zur Aufnahme mindestens eines Sensorelements in einem Innengehäuse, wobei das Innengehäuse zumindest teilweise von einem Außengehäuse umgeben ist.

Das erfindungsgemäße Verfahren umfasst insbesondere die im Folgenden beschriebenen Verfahrensschritte a) bis d), welche vorzugsweise in der beschriebenen Reihenfolge, beginnend mit a), folgend zunächst mit b), dann mit c), und endend mit d), durchgeführt werden, wobei ein oder mehrere der genannten oder weiterer Verfahrensschritte zumindest teilweise mit einem vorhergehenden oder nachfolgenden Verfahrensschritt ausgeführt werden können.

Gemäß Schritt a) wird das Außengehäuse des Schutzgehäuses in einen Einschweißnippel eingefügt, wobei das Außengehäuse über mindestens ein Feststellelement zur Einbringung in den Einschweißnippel verfügt.

Gemäß Schritt b) wird der Einschweißnippel mit darin eingefügtem Außengehäuse mittels einer Pressanpassung auf das Innengehäuse aufgesteckt.

Gemäß Schritt c) wird das auf das Innengehäuse aufgesteckte Außengehäuse unter Beibehaltung der Pressanpassung so lange über das Innengehäuse verschoben, bis das in dem Außengehäuse vorhandene mindestens eine Feststellelement eine zugehörige Einrastposition in dem Einschweißnippel erreicht hat. Durch diese Art des Einbaus kann das Innengehäuse insbesondere wie ein Träger für das Außengehäuse wirken.

Gemäß Schritt d) wird das als Träger für das Außengehäuse fungierende Innengehäuse so lange gedreht, bis das in dem Außengehäuse vorhandene mindestens eine Feststellelement in die oben beschriebene Einrastposition in dem Einschweißnippel eingefügt ist. Auf diese Weise wird das Außengehäuse erfindungsgemäß in Bezug auf das Innengehäuse fixiert.

In einer besonders bevorzugten Ausgestaltung kann der Einschweißnippel, in welchem das Außengehäuse gemäß Schritt a) eingefügt ist, mittels eines Dichtrings fixiert werden. Hierbei wird der Dichtring vorzugsweise auf ein Sensorgehäuse aufgebracht, wobei das Sensorgehäuse, vorzugsweise fest, etwa mittels einer Schweißnaht, mit dem Innengehäuse verbunden sein kann. Auf diese Weise kann das Außengehäuse mittels des Sensorgehäuses in dem Einschweißnippel fixiert werden und der auf das Sensorgehäuse aufgebrachte Dichtring kann ein Lösen des Sensorgehäuses, in welchem sich das Sensorelement befinden kann, von dem Schutzgehäuse, welches das Außengehäuse und das mittels einer Pressanpassung hierzu fixierte Innengehäuse umfassen kann, verhindern. Auf diese Weise kann das Außengehäuse in Bezug auf die Strömungsrichtung des Abgases mit Hilfe des mindestens einen Feststellelements in dem Außengehäuse, welches in der mindestens einen Einrastposition des Einschweißnippels eingefügt sein kann, ausgerichtet werden. Auf diese Weise kann eine erfindungsgemäße Ausrichtung der Sensorvorrichtung in Bezug auf die Strömungsrichtung des Abgases möglich sein, da das gemäß dem Stand der Technik üblicherweise erfolgende Anschweißen des Außengehäuses auf das Sondengehäuse unterbleiben kann. Für weitere Details in Bezug auf das erfindungsgemäße Verfahren wird auf die sich oben und/oder unten befindliche Beschreibung in Bezug auf die Sensorvorrichtung verwiesen.

Die erfindungsgemäße Sensorvorrichtung und das zugehörige Verfahren zu ihrer Bereitstellung ermöglichen insbesondere eine Orientierung des mindestens einen Schutzgehäuses der Sensorvorrichtung in Bezug auf die Strömungsrichtung des Abgases, wodurch sich die oben beschriebenen dynamischen Eigenschaften der Sensorvorrichtung verbessern lassen, während gleichzeitig, insbesondere bei geeigneter Auslegung der Ausgestaltung des Außengehäuses, ein Wassereintritt in das Sensorgehäuse verringert werden kann. Aufgrund der erhöhten Dynamik und des gleichzeitig erhöhten Widerstandes gegen Wasserschlag kann eine erfindungsgemäße Sensorvorrichtung bereits früher nach einem erfolgten Motorstart ihren Betriebsmodus annehmen, was insbesondere zur Verringerung von Abgasemissionen verwendet werden kann.

### Kurze Beschreibung der Zeichnungen

Ausführungsbeispiele der Erfindung sind in den Figuren dargestellt und werden in der nachfolgenden Beschreibung näher erläutert. Es zeigen:
- Figur 1:: schematische Darstellung einer erfindungsgemäßen Sensorvorrichtung während des erfindungsgemäßen Verfahrens zu ihrer Bereitstellung in Form einer Schnittzeichnung;
- Figur 2:: schematische Darstellung des erfindungsgemäßen Verfahrens zur Bereitstellung der erfindungsgemäßen Sensorvorrichtung in Form einer Schnittzeichnung;
- Figur 3:: schematische Darstellung in Form einer Schnittzeichnung eines Außengehäuses einer erfindungsgemäßen Sensorvorrichtung mit einem Feststellelement zur Fixierung in einen Einschweißnippel;
- Figur 4:: schematische Darstellung in Draufsicht einer erfindungsgemäßen Sensorvorrichtung, wobei a) eine ungerichtete Konstruktion (Stand der Technik) und b) eine gerichtete Konstruktion des Schutzgehäuses zeigen.

### Ausführungsformen der Erfindung

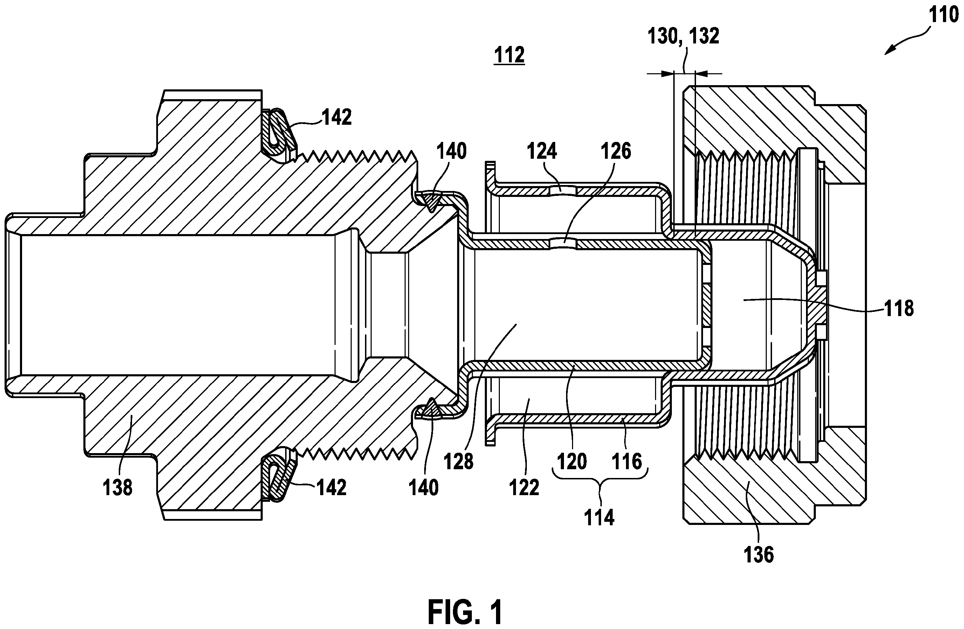

In der Figur 1 ist eine erfindungsgemäße Sensorvorrichtung 110 zur Erfassung mindestens einer Eigenschaft eines fluiden Mediums 112 während des erfindungsgemäßen Verfahrens zu ihrer Bereitstellung in Form einer Schnittzeichnung dargestellt. Die Sensorvorrichtung 110 umfasst ein Schutzgehäuse 114 zur Aufnahme mindestens eines Sensorelements (nicht dargestellt), welches von dem Schutzgehäuse 114 umgeben ist.

In dem in Figur 1 dargestellten bevorzugten Ausführungsbeispiel umfasst das Schutzgehäuse 114 ein Außengehäuse 116, welches einen, in Form einer Kuppel ausgestalteten Hohlraum 118 aufweist, in welchen ein Innengehäuse 120 eingebracht ist. Hierbei umschließt das Außengehäuse 116 das Innengehäuse 120 derart, dass sich zwischen dem Außengehäuse 116 und dem Innengehäuse 120 ein Zwischenraum 122 ausbildet. Weitere Ausführungen des Schutzgehäuses 114 zum Schutz des mindestens einen Sensorelements der Sensorvorrichtung 110 sind jedoch denkbar.

Das Außengehäuse 116 des Schutzgehäuses 114 der Sensorvorrichtung 110 verfügt über mindestens eine Eintrittsöffnung 124, durch welche ein fluides Medium 112 aus dem Abgasraum in den Zwischenraum 122 zwischen dem Außengehäuse 116 und dem Innengehäuse 120 eintreten kann. Innerhalb des Schutzgehäuses 114 wird das fluide Medium 112 auf einem Strömungspfad bis zu einer Zutrittsöffnung 126 zu einem Innenraum 128 des Innengehäuses 120, in welchem sich das Sensorelement (nicht dargestellt) befindet, geführt.

Erfindungsgemäß ist das Außengehäuse 116 über einen Abschnitt 130 mittels einer leichten Pressanpassung 132 in Bezug auf das Innengehäuse 120 fixiert. Das Außengehäuse ist in diesem bevorzugten Ausführungsbeispiel mittels eines (in Figur 1 nicht dargestellten) Feststellelements 134 in Bezug auf einen Einschweißnippel 136 fixiert.

Das in Figur 1 dargestellte bevorzugte Ausführungsbeispiel für die Sensorvorrichtung 110 weist weiterhin ein Sensorgehäuse 138 auf, welches das (nicht dargestellte) Sensorelement umgibt und welches mittels einer Schweißnaht 140 fest mit dem Innengehäuse 120 verbunden ist. Zur späteren Fixierung des Einschweißnippels 136 auf das Sensorgehäuse 138 verfügt das Sensorgehäuse 138 hier weiterhin über einen Dichtring 142.

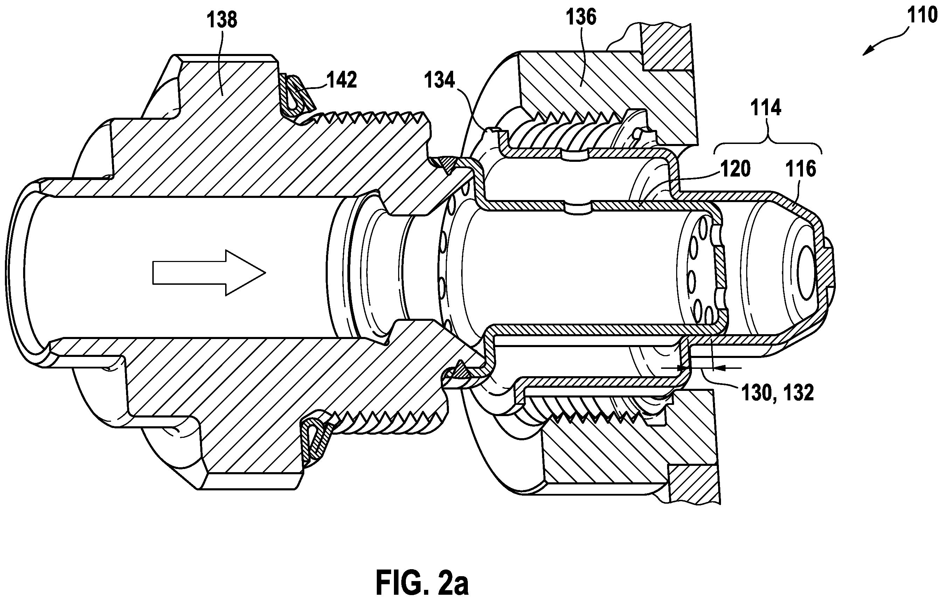

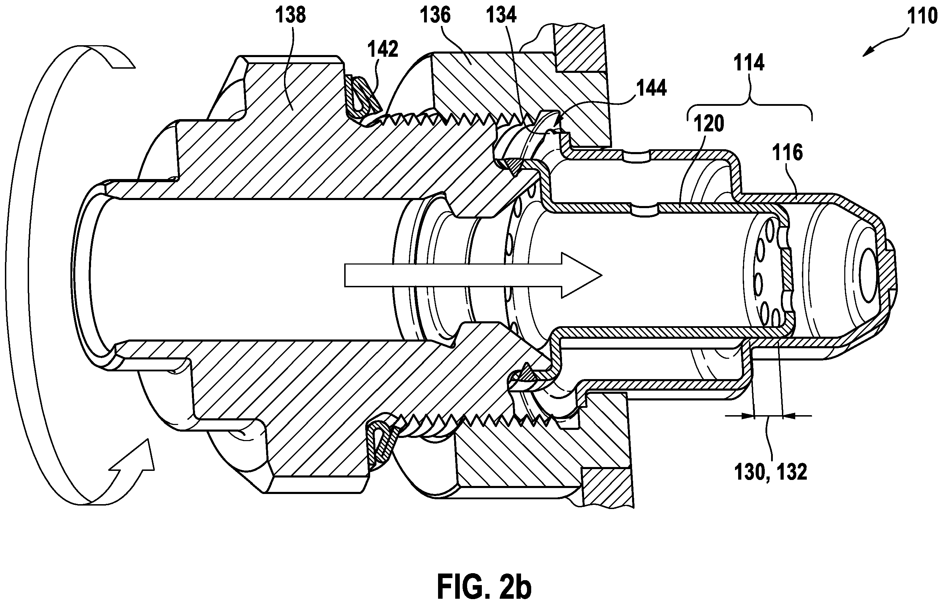

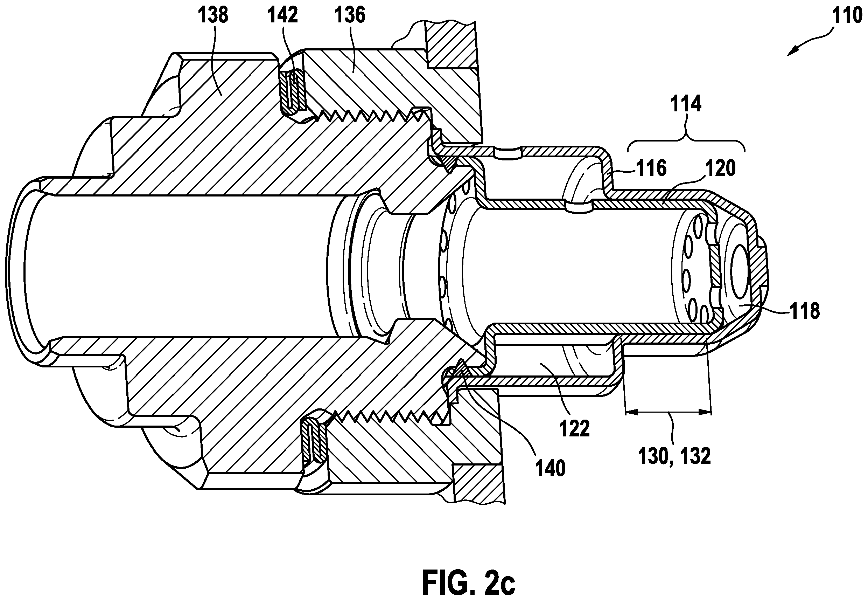

Figur 2 zeigt schematisch eine Darstellung des erfindungsgemäßen Verfahrens zur Bereitstellung der erfindungsgemäßen Sensorvorrichtung 110 in Form einer Schnittzeichnung.

In Figur 2a) sind schematisch die Verfahrensschritte a) und b) dargestellt. Gemäß Schritt a) wird das Außengehäuse 116 der Sensorvorrichtung 110 in den Einschweißnippel 136 aufgesteckt. Hierbei verfügt das Außengehäuse 116 über ein Feststellelement 134 zur Fixierung des Außengehäuses 116 in dem Einschweißnippel 136. Gemäß Schritt b) wird der Einschweißnippel 136 mit dem Außengehäuse 116 mittels einer Pressanpassung 132 über einen Abschnitt 130 auf das Innengehäuse 120 aufgesteckt.

In Figur 2b) sind die weiteren Verfahrensschritte c) und d) schematisch dargestellt. Gemäß Schritt c) wird das Außengehäuse 116 unter Beibehaltung der Pressanpassung 132 über den Abschnitt 130 derart über das Innengehäuse 120 verschoben, bis das Feststellelement 134 in dem Außengehäuse 116 eine Einrastposition 144 in dem Einschweißnippel 136 erreicht hat. Gemäß Schritt d) wird das Innengehäuse 120 so lange gedreht, bis das Feststellelement 134 in die Einrastposition 144 in dem Einschweißnippel 136 eingefügt ist.

Auf diese Weise wird, wie in Figur 2c) dargestellt, das Außengehäuse 116 in Bezug auf das Innengehäuse 120 fixiert. Wie in Figur 2c) dargestellt, verfügt das Sensorgehäuse 138 hier über den Dichtring 142, welcher dafür sorgt, dass der Einschweißnippel 136 in Bezug auf den Dichtring 142 fixiert wird. Der Einschweißnippel 136 trägt weiterhin Sorge dafür, dass das Außengehäuse 116 weiterhin in Bezug auf das Sensorgehäuse 138 fixiert wird, welches mittels der Schweißnaht 140 fest mit dem Innengehäuse 120 verbunden ist. Auf diese Weise wird, wie Figur 2c) schematisch zeigt, die erfindungsgemäße Sensorvorrichtung 110 bereitgestellt, welche mittels des Dichtrings 142 zusätzlich vorgespannt wird.

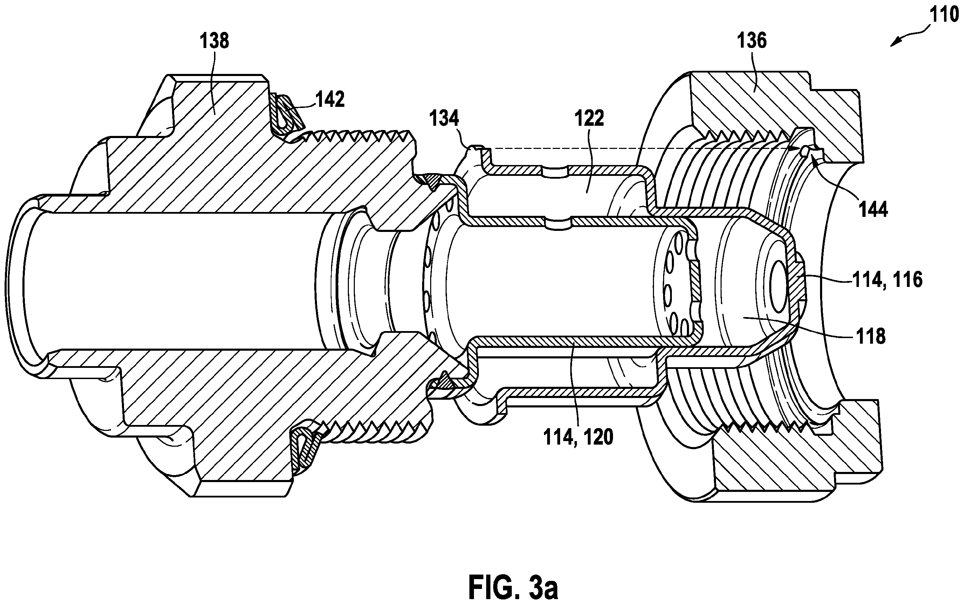

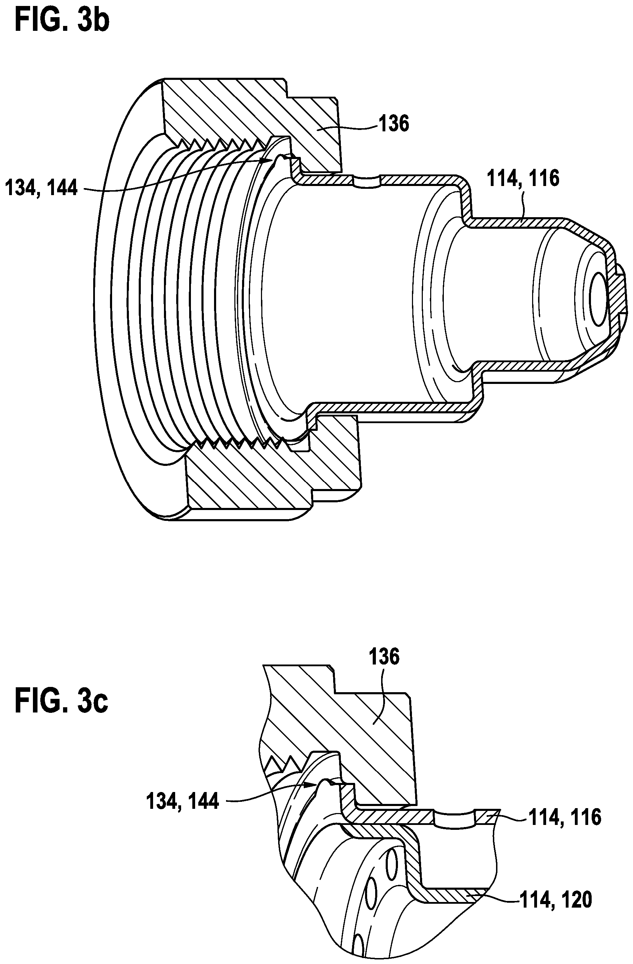

Figur 3 zeigt in schematischer Darstellung in Form einer Schnittzeichnung ein Außengehäuse 116 eines Schutzgehäuses 114 der erfindungsgemäßen Sensorvorrichtung 110, welche über ein Feststellelement 134 zur Fixierung des Außengehäuses 116 in dem Einschweißnippel 136 verfügt. Das Feststellelement 134 ist im vorliegenden bevorzugten Ausführungsbeispiel in Form einer vorstehenden Nase ausgestaltet, welche ein Einrasten des Außengehäuses 116 in der Einrastposition 144 im Einschweißnippel 136 ermöglicht. Dies ergibt sich beispielhaft aus den Figuren 3a) bis c), in welchen das Feststellelement 134 des Außengehäuses 116 in der jeweiligen Einrastposition 144 in dem Einschweißnippel 136 in sukzessiver Vergrößerung dargestellt ist.

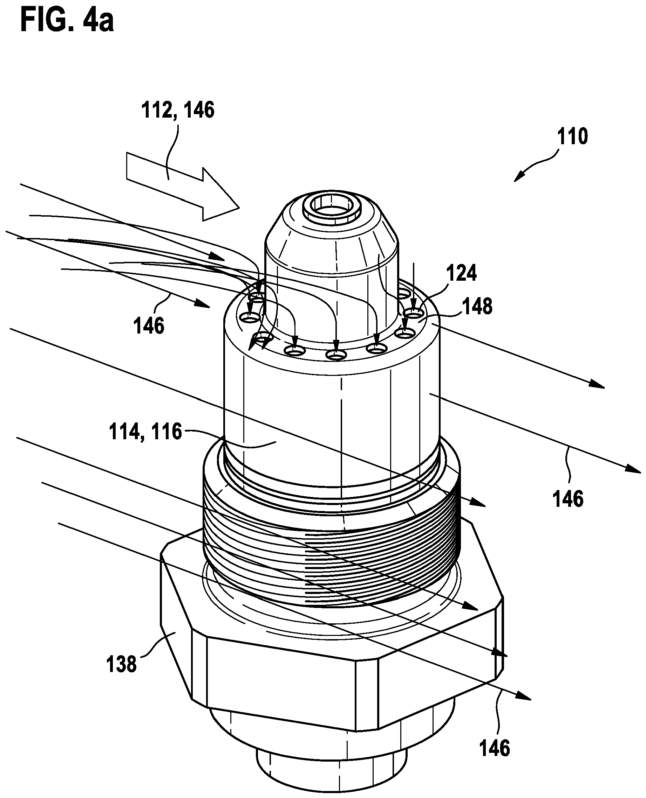

In Figur 4a) ist in schematischer Darstellung eine aus dem Stand der Technik bekannte erfindungsgemäße Sensorvorrichtung, welche eine ungerichtete Konstruktion in Bezug auf die Strömungsrichtung 146 des fluiden Mediums 112 aufweist, dargestellt. Die Eintrittsöffnungen 124 befinden sich hierbei auf einer Schulter 148 des Außengehäuses 116, wodurch nur ein ungeordneter Eintritt des fluiden Mediums 112 aus dem Messgasraum in die Sensorvorrichtung 110 ermöglicht wird.

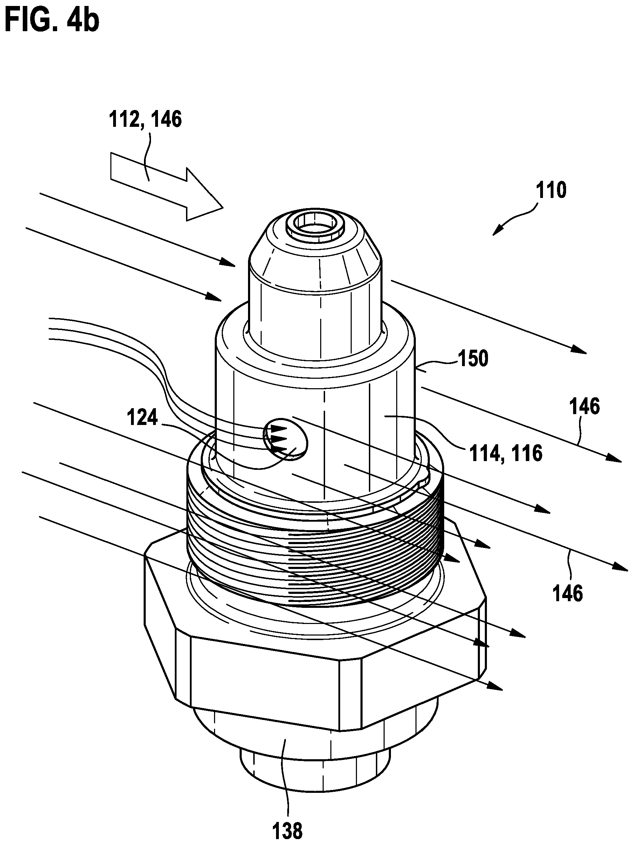

Erfindungsgemäß befindet sich jedoch, wie in Figur 4b) schematisch in Form einer Draufsicht auf die erfindungsgemäße Sensorvorrichtung 110 dargestellt, die mindestens eine Eintrittsöffnung 124 auf einer Mantelfläche 150 des in diesem bevorzugten Ausführungsbeispiel zylinderförmig ausgestalteten Außengehäuses 116. Die auf diese Weise mögliche gerichtete Konstruktion des Schutzgehäuses 114 verbessert die dynamischen Eigenschaften der Sensorvorrichtung 110, während gleichzeitig bei geeigneter Auslegung der Geometrie des Außengehäuses 116 weniger Wasser in die Sensorvorrichtung 110 eindringen kann.

## Patentansprüche

1. Sensorvorrichtung (110) zur Erfassung mindestens einer Eigenschaft eines fluiden Mediums (112), insbesondere eines Abgases einer Verbrennungskraftmaschine, umfassend mindestens ein Schutzgehäuse (114) zur Aufnahme mindestens eines Sensorelements in einem Innengehäuse (120), wobei das Innengehäuse (120) zumindest teilweise von einem Außengehäuse (116) umgeben ist,
**dadurch gekennzeichnet, dass** das Außengehäuse (116) mittels einer Pressanpassung (132) in Bezug auf das Innengehäuse (120) fixiert ist und weiterhin über mindestens ein Feststellelement (134) zur Fixierung in einem Einschweißnippel (136) verfügt.

2. Sensorvorrichtung (110) nach dem vorhergehenden Anspruch, **dadurch gekennzeichnet, dass** das Außengehäuse (116) mittels des Feststellelements (134) in Bezug auf den Einschweißnippel (136) fixiert ist.

3. Sensorvorrichtung (110) nach einem der vorhergehenden Ansprüche,
**dadurch gekennzeichnet, dass** das Sensorelement über ein Sensorgehäuse (138) verfügt, wobei das Sensorgehäuse (138) fest mit dem Innengehäuse (120) verbunden ist, vorzugsweise mittels einer Schweißnaht (140).

4. Sensorvorrichtung (110) nach einem der beiden vorhergehenden Ansprüche, **dadurch gekennzeichnet, dass** das Außengehäuse (116) weiterhin mittels des Einschweißnippels (136) in Bezug auf das Sensorgehäuse (138) fixiert ist.

5. Sensorvorrichtung (110) nach einem der drei vorhergehenden Ansprüche, **dadurch gekennzeichnet, dass** das Sensorgehäuse (138) über einen Dichtring (142) verfügt, wobei der Einschweißnippel (136) mittels des Dichtrings (142) in Bezug auf das Sensorgehäuse (138) fixiert ist.

6. Sensorvorrichtung (110) nach einem der vorhergehenden Ansprüche,
**dadurch gekennzeichnet, dass** das Außengehäuse (116) das Innengehäuse (120) teilweise derart umschließt, dass sich ein Zwischenraum (122) ausbildet, wobei das Außengehäuse (116) über mindestens eine Eintrittsöffnung (124) für das fluide Medium (112) in den Zwischenraum (122) verfügt, wobei das Innengehäuse (120) über mindestens eine Zutrittsöffnung (126) für das fluide Medium (112) aus dem Zwischenraum (122) zu dem Sensorelement verfügt.

7. Sensorvorrichtung (110) nach dem vorhergehenden Anspruch, **dadurch gekennzeichnet, dass** das Außengehäuse (116) eine Mantelfläche (150) aufweist, wobei sich die Eintrittsöffnung (124) für das fluide Medium (112) in der Mantelfläche (150) befindet, und das Innengehäuse (120) eine weitere Mantelfläche aufweist, wobei sich die Zutrittsöffnung (126) für das fluide Medium (112) aus dem Zwischenraum (122) vorzugsweise in der weiteren Mantelfläche befindet.

8. Verfahren zur Bereitstellung einer Sensorvorrichtung (110) zur Erfassung mindestens einer Eigenschaft eines fluiden Mediums (112), insbesondere eines Abgases einer Verbrennungskraftmaschine, umfassend mindestens ein Schutzgehäuse (114) zur Aufnahme mindestens eines Sensorelements in einem Innengehäuse (120), wobei das Innengehäuse (120) zumindest teilweise von einem Außengehäuse (116) umgeben ist, mit den Schritten:
a) Einfügen des Außengehäuses (116) in einen Einschweißnippel (136), wobei das Außengehäuse (116) über mindestens ein Feststellelement (134) zur Fixierung des Außengehäuses (116) in dem Einschweißnippel (136) verfügt;
b) Aufstecken des Einschweißnippels (136) mit dem darin eingefügten Außengehäuse (116) mittels einer Pressanpassung (132) auf das Innengehäuse (120);
c) Verschieben des Außengehäuses (116) unter Beibehaltung der Pressanpassung (132) über das Innengehäuse (120), bis das Feststellelement (134) in dem Außengehäuse (116) eine Einrastposition (144) in dem Einschweißnippel (136) erreicht hat;
d) Drehen des Innengehäuses (120), bis das Feststellelement (134) in die Einrastposition in dem Einschweißnippel (136) eingefügt ist, wodurch das Außengehäuse (116) in Bezug auf das Innengehäuse (120) fixiert wird.

9. Verfahren nach dem vorherigen Anspruch, wobei der Einschweißnippel (136) mittels eines Dichtrings (142) fixiert wird, wobei der Dichtring (142) auf ein Sensorgehäuse (138) aufgebracht ist, wobei das Sensorgehäuse (138), vorzugsweise mittels einer Schweißnaht (140), mit dem Innengehäuse (120) verbunden ist.

## Claims

1. Sensor device (110) for detecting at least one property of a fluid medium (112), in particular an exhaust gas from an internal combustion engine, comprising at least one protective housing (114) for holding at least one sensor element in an inner housing (120), the inner housing (120) being at least partly surrounded by an outer housing (116),
**characterized in that** the outer housing (116) is fixed in relation to the inner housing (120) by means of a press fit (132) and also has at least one retaining element (134) for fixing in a weld nipple (136).

2. Sensor device (110) according to the preceding claim, **characterized in that** the outer housing (116) is fixed in relation to the weld nipple (136) by means of the retaining element (134).

3. Sensor device (110) according to one of the preceding claims, **characterized in that** the sensor element has a sensor housing (138), wherein the sensor housing (138) is firmly connected to the inner housing (120), preferably by means of a weld (140).

4. Sensor device (110) according to one of the two preceding claims, **characterized in that** the outer housing (116) is also fixed in relation to the sensor housing (138) by means of the weld nipple (136) .

5. Sensor device (110) according to one of the three preceding claims, **characterized in that** the sensor housing (138) has a sealing ring (142), wherein the weld nipple (136) is fixed in relation to the sensor housing (138) by means of the sealing ring (142).

6. Sensor device (110) according to one of the preceding claims, **characterized in that** the outer housing (116) partly encloses the inner housing (120) in such a way that an interspace (122) is formed, wherein the outer housing (116) has at least one inlet opening (124) for the fluid medium (112) into the interspace (122), wherein the inner housing (120) has at least one passage opening (126) for the fluid medium (112) from the interspace (122) to the sensor element.

7. i Sensor device (110) according to the preceding claim, **characterized in that** the outer housing (116) has an outer surface (150), wherein the inlet opening (124) for the fluid medium (112) is located in the outer surface (150), and the inner housing (120) has a further outer surface, wherein the passage opening (126) for the fluid medium (112) from the interspace (122) is preferably located in the further outer surface.

8. Method for providing a sensor device (110) for detecting at least one property of a fluid medium (112), in particular an exhaust gas from an internal combustion engine, comprising at least one protective housing (114) for holding at least one sensor element in an inner housing (120), the inner housing (120) being at least partly surrounded by an outer housing (116), comprising the steps:
a) inserting the outer housing (116) into a weld nipple (136), wherein the outer housing (116) has at least one retaining element (134) for fixing the outer housing (116) in the weld nipple (136);
b) plugging the weld nipple (136) with the outer housing (116) inserted therein onto the inner housing (120) by means of a press fit (132);
c) displacing the outer housing (116) over the inner housing (120) whilst maintaining the press fit (132), until the retaining element (134) in the outer housing (116) has reached a latching position (144) in the weld nipple (136);
d) rotating the inner housing (120) until the retaining element (134) has been inserted into the latching position in the weld nipple (136), by which means the outer housing (116) is fixed in relation to the inner housing (120).

9. Method according to the preceding claim, wherein the weld nipple (136) is fixed by means of a sealing ring (142), wherein the sealing ring (142) is attached to a sensor housing (138), wherein the sensor housing (138) is connected to the inner housing (120), preferably by means of a weld (140).

## Revendications

1. Dispositif capteur (110) pour détecter au moins une caractéristique d'un milieu fluide (112), en particulier d'un gaz d'échappement d'un moteur à combustion interne, comprenant au moins un boîtier de protection (114) pour loger au moins un élément de capteur dans un boîtier intérieur (120), dans lequel le boîtier intérieur (120) est au moins partiellement entouré d'un boîtier extérieur (116),
**caractérisé en ce que** le boîtier extérieur (116) est fixé par rapport au boîtier intérieur (120) au moyen d'un raccord à sertir (132) et présente en outre au moins un élément de fixation (134) destiné à être fixé dans un raccord à souder (136).

2. Dispositif capteur (110) selon la revendication précédente, **caractérisé en ce que** le boîtier extérieur (116) est fixé au moyen de l'élément de fixation (134) par rapport au raccord à souder (136).

3. Dispositif capteur (110) selon l'une des revendications précédentes, **caractérisé en ce que** l'élément capteur est pourvu d'un boîtier de capteur (138), dans lequel le boîtier de capteur (138) est solidement relié au boîtier intérieur (120), de préférence au moyen d'un cordon de soudure (140).

4. Dispositif capteur (110) selon l'une des deux revendications précédentes, **caractérisé en ce que** le boîtier extérieur (116) est en outre fixé par rapport au boîtier de capteur (138) au moyen du raccord à souder (136) .

5. Dispositif capteur (110) selon l'une des trois revendications précédentes, **caractérisé en ce que** le boîtier de capteur (138) présente une bague d'étanchéité (142), dans lequel le raccord à souder (136) est fixé par rapport au boîtier de capteur (138) au moyen de la bague d'étanchéité (142).

6. Dispositif capteur (110) selon l'une des revendications précédentes, **caractérisé en ce que** le boîtier extérieur (116) enveloppe partiellement le boîtier intérieur (120) de manière à former un espace intermédiaire (122), dans lequel le boîtier extérieur (116) présente au moins une ouverture d'entrée (124) pour le milieu fluide (112) dans l'espace intermédiaire (122), dans lequel le boîtier intérieur (120) présente au moins une ouverture d'accès (126) pour le milieu fluide (112) depuis l'espace intermédiaire (122) vers l'élément capteur.

7. Dispositif capteur (110) selon la revendication précédente, **caractérisé en ce que** le boîtier extérieur (116) comporte une surface d'enveloppe (150), dans lequel l'orifice d'entrée (124) pour le milieu fluide (112) est situé dans la surface d'enveloppe (150), et le boîtier intérieur (120) présente une autre surface d'enveloppe, dans lequel l'orifice d'accès (126) pour le milieu fluide (112) depuis l'espace intermédiaire (122) est de préférence situé dans l'autre surface d'enveloppe.

8. Procédé de fourniture d'un dispositif capteur (110) pour détecter au moins une propriété d'un milieu fluide (112), en particulier d'un gaz d'échappement d'un moteur à combustion interne, comprenant au moins un boîtier de protection (114) pour loger au moins un élément capteur dans un boîtier intérieur (120), dans lequel le boîtier intérieur (120) est au moins partiellement entouré par un boîtier extérieur (116), comprenant les étapes consistant à :
a) insérer le boîtier extérieur (116) dans un raccord à souder (136), dans lequel le boîtier extérieur (116) présente au moins un élément de fixation (134) destiné à fixer le boîtier extérieur (116) dans le raccord à souder (136) ;
b) monter le raccord à souder (136) avec le boîtier extérieur (116) qui y est inséré au moyen d'un raccord à sertir (132) sur le boîtier intérieur (120) ;
c) déplacer le boîtier extérieur (116) au-dessus du boîtier intérieur (120) tout en maintenant le raccord à sertir (132) jusqu'à ce que l'élément de fixation (134) ait atteint dans le boîtier extérieur (116) une position d'encliquetage (144) dans le raccord à souder (136) ;
d) faire tourner le boîtier intérieur (120) jusqu' à ce que l'élément de fixation (134) soit inséré à la position d'encliquetage dans le raccord à souder (136), le boîtier extérieur (116) étant ainsi fixé par rapport au boîtier intérieur (120).

9. Procédé selon la revendication précédente, dans lequel le raccord à souder (136) est fixé au moyen d'une bague d'étanchéité (142), dans lequel la bague d'étanchéité (142) est placée sur un boîtier de capteur (138), dans lequel le boîtier de capteur (138) est relié au boîtier intérieur (120), de préférence au moyen d'un cordon de soudure (140).
